# EUROPEAN PATENT APPLICATION

(11) **EP 1 985 800 A2**
(43) Date of publication of application: **29.10.2008**
(21) Application number: 08251497.7
(22) Date of filing: 23.04.2008
(51) Int. Cl.: F01D 5/00, F01D 11/02

(54) **Dimensional restoration of turbine blade knife edge seals**

(30) Priority: 27.04.2007 US 796221
(71) Applicant: United Technologies Corporation, Hartford, CT 06101 (US)
(72) Inventor: Rose, William M., Warren, MA 01585 (US)
(74) Representative: Leckey, David Herbert

(57) **Abstract**

A turbine blade assembly comprising a knife edge seal (18) having at least one seal member (22;24). The at least one seal member (22;24) comprises a restored portion (28;32) fused to a stub portion (26;30), where the restored portion comprises a plurality of fused layers (28a...;32a...) of a restoration material, the restoration material being melted and deposited in a layer-by-layer manner to form the plurality of fused layers.

## Description

### BACKGROUND

The present invention relates to dimensional restoration of gas turbine engine components, such as turbine blades. In particular, the present invention relates to methods of dimensionally restoring knife edge seals disposed on turbine blades.

Gas turbine engines operate by burning a combustible fuel-air mixture in a combustor and converting the energy of combustion into a propulsive force. Combustion gases are directed axially rearward from the combustor through an annular duct, interacting with a plurality of turbine blade stages disposed within the annular duct. This transfers the combustion gas energy to the turbine blades. In a typical turbine section, there are multiple, alternating stages of stationary vanes and rotating blades disposed in the annular duct.

During the course of operation, the combustion gas temperature may reach 2000°F (1093°C) or more. As such, some turbine blade stages are cooled with lower temperature cooling air for improved durability. Air for cooling the first-stage blades bypasses the combustor and is directed to an inner diameter cavity located between a first-stage vane support and a first-stage rotor assembly. The rotational force of the rotor assembly pumps the cooling air radially outward and into a series of conduits within each blade, thus providing the required cooling.

Since the outboard radius of the inner cavity is adjacent to the annular duct carrying the combustion gasses, the outboard radius is sealed to prevent leakage of the pressurized cooling air into the combustion gas stream. Knife edge seals are typically used to seal annular gaps between adjacent rotating components and non-rotating components in the engine. The knife edge seals typically include one or more seal members (e.g., knife edges) that engage with complementary lands (e.g., honeycomb surfaces) on the non-rotating portions of the turbine section. This accordingly restricts the flow of air between the knife edge seals and the complementary lands. However, during the course of operation, the engagements between the knife edge seals and the complementary lands can erode the seal members of the knife edge seals, thereby reducing the effectiveness of the seals.

To increase the effectiveness of the eroded knife edge seals, the seals need to be replaced or restored. Due to economic factors, it is common practice in the aerospace industry to restore turbine engine components rather than replace them. Such restorations desirably restore damaged regions of the engine components to their original dimensions. As such, there is a need for a dimensional restoration method that is efficient and cost effective, thereby providing dimensionally restored knife edge seals for use in gas turbine engines.

### SUMMARY

The present invention in one aspect relates to a turbine blade assembly having a knife edge seal that includes at least one seal member. The seal member(s) includes a stub portion and a restored portion fused to the stub portion, where the restored portion includes a plurality of fused layers of a restoration material, and where the restoration material is melted and deposited in a layer-by-layer manner to form the plurality of fused layers.

### BRIEF DESCRIPTION OF THE DRAWINGS

FIG. 1 is a bottom perspective view of a turbine blade assembly that includes a knife edge seal dimensionally restored pursuant to the present invention.
FIG. 2A-2E are top perspective view of the turbine blade assembly oriented at a pivoted angle, illustrating a method of dimensionally restoring seal members of the knife edge seal.

### DETAILED DESCRIPTION

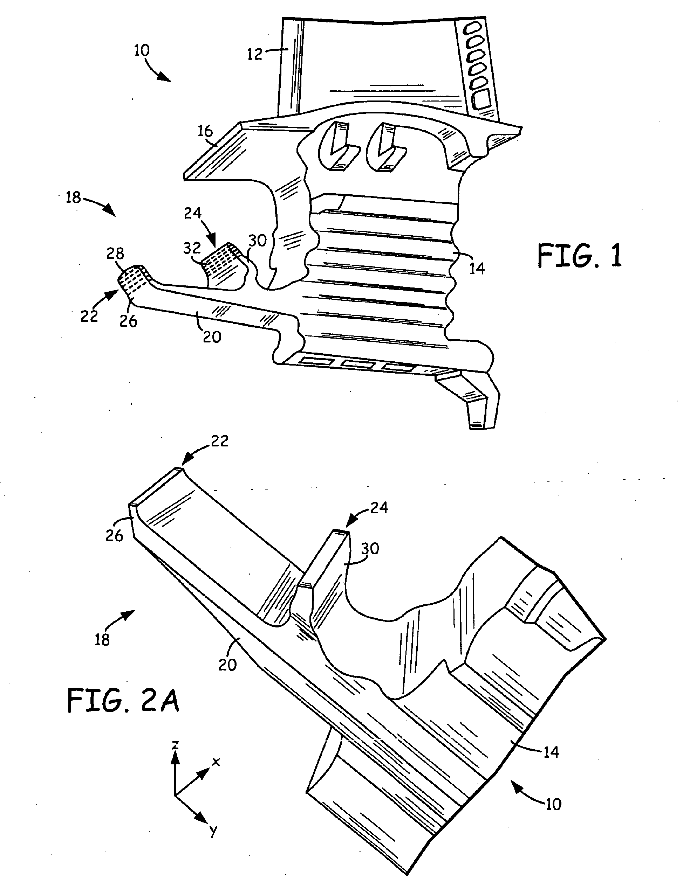

FIG. 1 is a perspective view of turbine blade assembly 10, which includes airfoil 12, root 14, platform 16, and knife edge seal 18, where knife edge seal 18 is dimensionally restored pursuant to the present invention. Airfoil 12, root 14, and platform 16 are standard components of a turbine blade, such as those disclosed in Memmen et al., U.S. Patent Publication No. 2006/0275108. Knife edge seal 18 is a labyrinth seal that works in combination with a complementary land (e.g., honeycomb surface) (not shown) to restrict the flowpath of air in a turbine section of a gas turbine engine (not shown). Knife edge seal 18 includes base portion 20 and seal members 22 and 24, where base portion 20 extends in a generally axial direction from root 14. Seal members 22 and 24 are knife edges that extend from base portion 20, and are the portions of knife edge seal 18 that engage with a complementary land of a gas turbine engine.

As shown, seal member 22 includes stub portion 26 and restored portion 28, and seal member 24 includes stub portion 30 and restored portion 32. Over extended periods of operation, the rotation of turbine blade assembly 10 causes seal members 22 and 24 to abrasively erode against the complementary lands, thereby respectively wearing seal members 22 and 24 down to stub portions 26 and 30. This reduces the effectiveness of knife edge seal 18, which may potentially allow the pressurized cooling air to bleed into the combustion gas stream. However, pursuant to the present invention, restored portions 28 and 32 are each formed in a layer-by-layer manner on stub portions 26 and 30, respectively. This restores seal members 22 and 24 to their original dimensions, thereby restoring the sealing efficiency of knife edge seal 18.

While the following discussion focuses on the dimensional restoration of knife edge seal 18 having a pair of knife edge seal members (i.e., seal members 22 and 24), the present invention is also suitable for use with a variety of knife edge seals secured to turbine blades, where the knife edge seals have at least one seal member configured to engage with a complementary land of a gas turbine engine. Examples of suitable knife edge seals that may be dimensionally restored pursuant to the present invention include below-platform seals secured to turbine blades, such as labyrinth seals (e.g., as shown in FIG. 1) and hammerhead seals. Examples of suitable hammerhead seals are disclosed in Memmen et al., U.S. Patent Publication No. 2006/0275108.

FIGS. 2A-2F are top perspective views of turbine blade assembly 10 (oriented at a pivoted angle), which illustrate a method of dimensionally restoring seal members 22 and 24 pursuant to the present invention. FIG. 2A illustrates seal members 22 and 24 prior to the formation of restored portions 28 and 32 (shown in FIG. 1). Seal members 22 and 24 are dimensionally restored by initially removing turbine blade assembly 10 from the gas turbine engine (not shown), and machining stub portions 26 and 30 to remove any undesired topographical features.

Turbine blade assembly 10 is then pivoted at an angle such that at least stub portion 26 is generally aligned in a vertical direction. The pivoted orientation of turbine blade assembly 10 allows a restoration material used in the dimensional restoration to be deposited downward in a substantially vertical direction onto stub portion 26. For ease of discussion, the orientation of turbine blade assembly 10 is referenced relative to an x-y-z Cartesian coordinate system, where the lateral widths of stub portions 26 and 30 extend along the x-axis, the longitudinal length of base portion 20 extends along the y-axis, and the z-axis represents the vertical direction. Turbine blade assembly 10 may be retained in the pivoted orientation with a brace mechanism (not shown), or alternatively, may be manually held. As discussed below, restored portions 26 and 28 are then each formed in a layer-by-layer manner on stub portions 26 and 30, respectively.

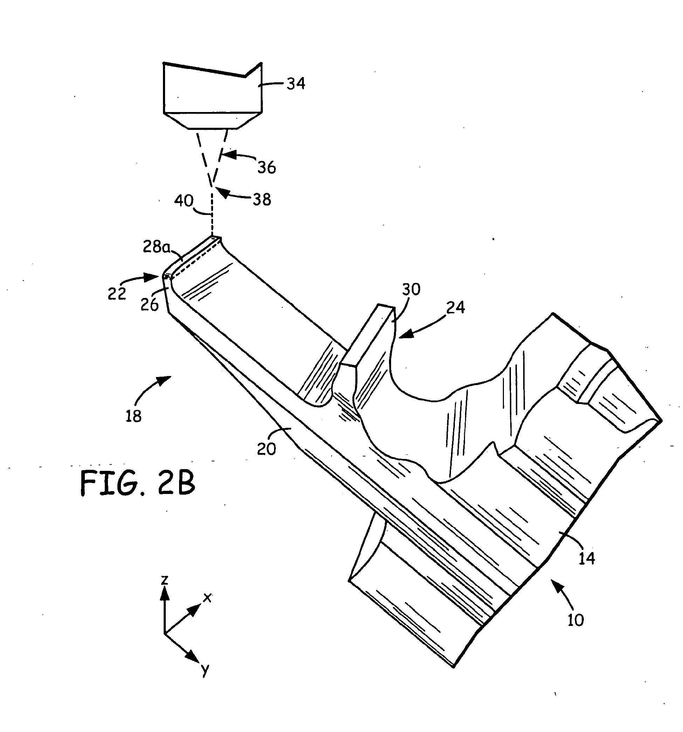

FIG. 2B shows knife edge seal 18 with layer 28a of restoration portion 28 being built on stub portion 26, where the surface of stub portion 26 is shown with broken lines. In the shown embodiment, the present invention is performed with use of laser system 34, which emits laser beam 36 having a focal point 38. Layer 28a is built by melting a restoration material with laser beam 36, depositing the molten restoration material onto stub portion 26 (represented with broken line 40), and allowing the molten restoration material to cool and fuse to stub portion 26. As discussed above, the pivoted orientation of turbine blade assembly 10 allows the molten restoration material to be deposited downward in a substantially vertical direction (i.e., substantially along the z-axis). This increases the accuracy of the deposition.

Suitable restoration materials for use with the present invention include weldable metals, such as nickel, nickel-based alloys and superalloys, cobalt, cobalt-based alloys and superalloys, and combinations thereof; and may also include one or more additional materials such as carbon, titanium, chromium, niobium, hafnium, tantalum, molybdenum, tungsten, aluminum, and iron. Examples of particularly suitable restoration materials for use with the present invention include nickel-based single crystal superalloys, such as those commercially available under the trade designation "PWA 1484" alloys.

Examples of suitable laser systems for laser system 34 include solid-state laser systems and gas laser systems (e.g., Nd:YAG and CO₂ lasers), which emit laser beams (i.e., laser beam 36) having intensities capable of readily melting the restoration material. Turbine blade assembly 10 is desirably positioned such that stub portion 26 is located below focal point 38 of laser beam 36. The restoration material is then fed in a continuous manner to focal point 38, and is accordingly melted. The restoration material may be supplied to focal point 38 in a variety of media, such as powders, granules, wire stock, and rod stock. Particularly suitable laser systems for use in this embodiment include laser systems that inject, or otherwise coaxially feed the restoration material to the laser beam. An example of a suitable coaxial-feed laser system is disclosed in Baker et al., U.S. Patent No. 7,030,337. Such laser systems allow successive portions of the restoration material to be fed to the laser beam focal point to melt the restoration material.

Upon melting, the restoration material then deposits onto stub portion 26 to build layer 28a. Laser beam 36 and the restoration material feed are then moved across stub portion 26 along the x-axis to deposit successive portions of the molten restoration material. For example, laser system 34 may be a multiple-axis laser system (e.g. a 5-axis laser system), which provides a wide range of motion to provide accurate depositions. Alternatively, turbine blade assembly 10 may be moved relative to laser beam 36 to guide the deposition process along the x-axis. Suitable deposition rates of the restoration material for forming layer 28a range from about 0.1 grams/minute to about 5 grams/minute, with particularly suitable deposition rates ranging from about 1 gram/minute to about 3 grams/minute. Suitable thicknesses for layer 28a may vary depending on a variety of factors, such as the amount of restoration material, the composition of the restoration material, and the original dimensions of seal member 22. Examples of suitable thicknesses for layer 28a range from about 10 micrometers to about 200 micrometers, with particularly suitable thicknesses for layer 28a ranging from about 25 micrometers to about 100 micrometers.

The use of laser beam 36 to melt the restoration material is beneficial for providing strong welds and fast build times. Laser beam 36 rapidly melts the restoration material and reduces the formation of porosities (e.g., air bubbles) in the molten restoration material, thereby increasing the strength of the resulting weld. Upon being deposited on stub portion 26, the molten restoration material cools and substantially solidifies, thereby forming layer 28a fused to stub portion 26.

In an alternative embodiment, the restoration material is melted with a plasma arc welding system (not shown). In this embodiment, the plasma arc welding system melts the restoration material with the use of an electrode (e.g., a tungsten electrode) that emits an electric arc between the electrode and stub portion 26. The molten restoration material is then deposited and fused to stub portion 26 in the same manner as discussed above. Suitable restoration material media for use with plasma arc welding systems include wire stock and rod stock.

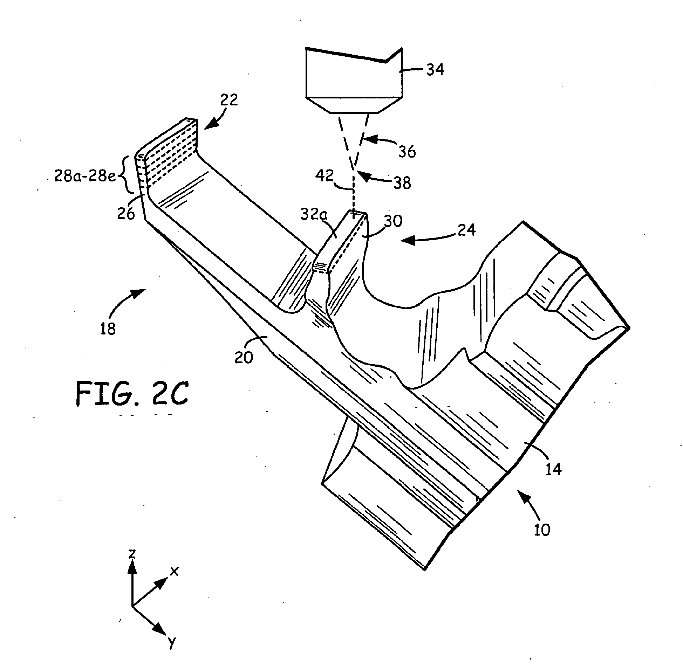

FIG. 2C shows knife edge seal 18 after all of the layers of restoration portion 28 are built on stub portion 26. The layers of restoration portion 28 are referred to as layers 28a-28e, where layer 28a is the bottom layer and layer 28e is the top layer. Layers 28b-28e are formed on layer 28a in the same manner as discussed above for layer 28a, thereby forming restored portion 28 in a pre-machined state. The number of layers (e.g., layers 28a-28e) built on stub portion 26 desirably provide enough restoration material to dimensionally restore seal member 22 to its original dimensions, and are dependent on the thicknesses of the given layers. Examples of suitable numbers of layers for forming restoration portion 28 range from 2 layers to 20 layers, with particularly suitable numbers of layers ranging from 5 layers to 10 layers.

In one embodiment, layers 28a-28e are built by depositing the restoration material in a series of back-and-forth patterns along the x-axis. For example, layer 28a is initially formed by depositing the restoration material in a first direction along the x-axis, and providing a suitable amount of time for the restoration material to cool and fuse to stub portion 26. Layer 28b is then formed by depositing the restoration material in an opposing direction along the x-axis from the first direction used to form layer 28a. This pattern is then repeated for layers 28c-28e. In one embodiment, the back-and-forth movement is accomplished by moving laser system 34 back-and-forth along the x-axis in a vertical raster pattern, thereby reducing the amount of movement required by laser system 34 to build layers 28a-28e. The reduced amount of movement correspondingly reduces the amount of time required to build restored portion 28.

FIG. 2C also shows layer 32a of restoration portion 32 being built on stub portion 30 with laser system 34, where the surface of stub portion 30 is also shown with broken lines. After restored portion 22 is built, laser system 34 moves along the y-axis toward stub portion 30 until laser system 34 is positioned above stub portion 30. Turbine blade assembly 10 may also be repositioned such that stub portion 30 is generally aligned in a vertical direction along the z-axis. This is beneficial if stub portions 26 and 32 are oriented in non-parallel directions. The pivoted orientation is also beneficial to move platform 16 (shown in FIG. 1) out of the deposition path of laser system 34. In various designs of turbine blade assembly 10, platform 16 may extend over seal member 24 when turbine blade assembly 10 is disposed in an upright orientation, thereby blocking a vertical deposition of the restoration material. Thus, turbine blade assembly 10 is desirably pivoted to move platform 16 out of the deposition path of laser system 34.

Layer 32a is then built in the same manner as discussed above for layer 28a. Accordingly, layer 32a is built by melting the restoration material with laser beam 36, depositing the molten restoration material onto stub portion 30 (represented with broken line 42), and allowing the molten restoration material to cool and fuse to stub portion 30. Suitable restoration materials, deposition rates, and layer thicknesses are the same as those discussed above for layer 28a.

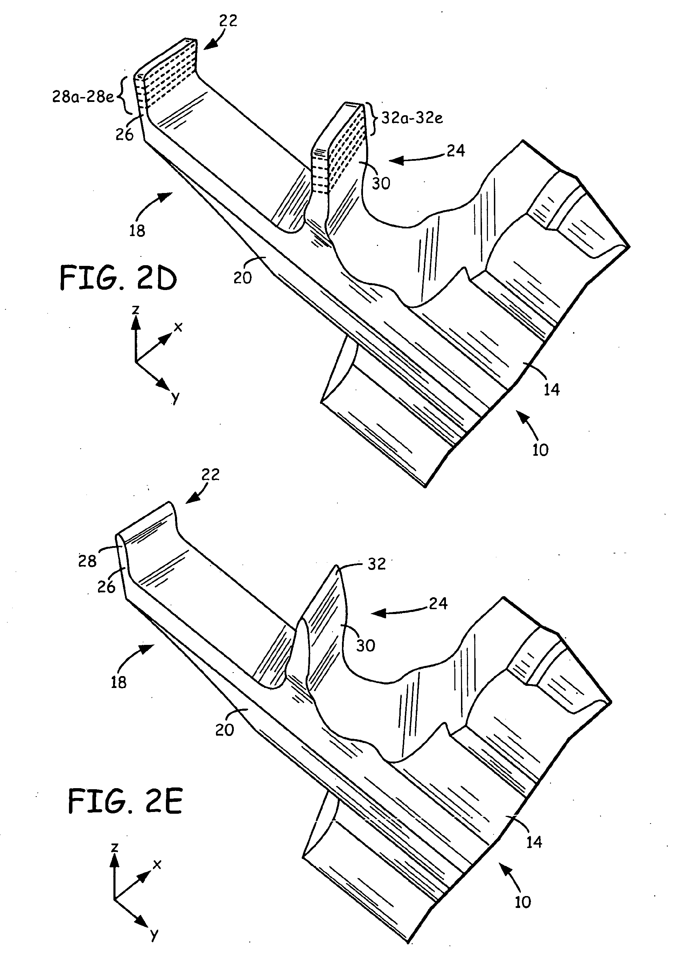

FIG. 2D shows knife edge seal 18 after all of the layers of restoration portion 32 are built on stub portion 30. The layers of restoration portion 32 are referred to as layers 32a-32e, where layer 32a is the bottom layer and layer 32e is the top layer. Layers 32b-32e are formed on layer 32a in the same manner as discussed above for layers 28a and 32a, thereby forming restored portion 32 in a pre-machined state. The number of layers (e.g., layers 32a-32e) built on stub portion 32 desirably provide enough restoration material to dimensionally restore seal member 24 to its original dimensions, and are dependent on the thicknesses of the given layers. Examples of suitable numbers of layers for forming restoration portion 32 include those discussed above for restoration portion 26. It is noted that the number of layers for restoration portions 28 and 32 may differ depending on the original dimensions of restoration portions 28 and 32, and on the extent of abrasive wearing incurred by each of restoration portions 28 and 32.

FIG. 2E shows knife edge seal 18 after restored portions 28 and 32 are machined down to the original dimensions of seal members 22 and 24. Suitable systems for machining metal parts include manual or computer numerical controlled (CNC) cutting systems that remove the excess portions of restored portions 28 and 32. When the original dimensions of seal members 22 and 24 is achieved, turbine blade assembly 10 may then undergo post-processing steps (e.g., cleaning and coating). Turbine blade assembly 10 may then be reinstalled in a turbine section of a gas turbine engine. The above-discussed layer-by-layer deposition process provides good part strengths for seal members 22 and 24, which allows knife edge seal 18 to work with a complementary lands of the gas turbine engine.

Although the present invention has been described with reference to preferred embodiments, workers skilled in the art will recognize that changes may be made in form and detail without departing from the scope of the invention.

## Claims

1. A turbine blade assembly (10) comprising:
an airfoil (12);
a root (14) extending from the airfoil (12);
a knife edge seal base portion (20) extending from the root; and
at least one seal member (22;24) comprising:
a stub portion (26;30) extending from the base portion (20); and
a restored portion (28;32) fused to the stub portion (26;30), the restored portion comprising a plurality of fused layers (28a...,32a...) of a restoration material, the restoration material being melted and deposited in a layer-by-layer manner to form the plurality of fused layers.

2. The turbine blade assembly of claim 1, wherein the knife edge seal (18) is selected from the group consisting of a labyrinth seal and a hammerhead seal.

3. The turbine blade assembly of claim 1 or 2, wherein the molten restoration material is selected from the group consisting of nickel, nickel-based alloys, nickel-based superalloys, cobalt, cobalt-based alloys, cobalt-based superalloys, and combinations thereof.

4. The turbine blade assembly of any preceding claim, wherein the plurality of fused layers comprises from 2 fused layers to 20 fused layers.

5. A method for restoring a knife edge seal (18) of a turbine blade (10), the method comprising:
melting a restoration material;
depositing successive portions of the molten restoration material in a layer-by-layer manner onto a first stub portion (26) of the knife edge seal (18), thereby building a first set of successive layers (28a...) on the first stub portion; and
at least partially solidifying each of the first set of successive layers (28a...) as each of the successive portions of the molten restoration material are deposited.

6. The method of claim 5, wherein melting the restoration material comprises melting the restoration material with a system selected from the group consisting of a laser system and a plasma arc welding system.

7. The method of claim 5 or 6, wherein depositing the successive portions of the molten restoration material in the layer-by-layer manner comprises depositing the successive portions of the molten material in a back-and-forth raster pattern.

8. The method of claim 5, 6 or 7, wherein the molten restoration material is selected from the group consisting of nickel, nickel-based alloys, nickel-based superalloys, cobalt, cobalt-based alloys, cobalt-based superalloys, and combinations thereof.

9. The method of any of claims 5 to 8, further comprising pivoting the turbine blade (10) until the first stub portion (26) is oriented in a substantially vertical direction.

10. The method of any of claims 5 to 9, wherein depositing the successive portions of the molten restoration material is performed at a deposition rate ranging from about 0.1 grams/minute to about 5 grams/minute.

11. The method of claim 10, wherein the deposition rate ranges from about 1 gram/minute to about 3 grams/minute.

12. The method of any of claims 5 to 11, further comprising:
depositing successive portions of the molten restoration material in a layer-by-layer manner onto a second stub portion (30) of the knife edge seal (18), thereby building a second set of successive layers on the second stub portion; and
at least partially solidifying each of the second set of successive layers (32a....) as each of the successive portions of the molten restoration material are deposited.

13. The method of any of claims 5 to 12, further comprising:
preparing the first stub portion (26) of the knife edge seal (18) prior to depositing the molten restoration material thereon.

14. The method of any of claims 5 to 13, further comprising melting the restoration material with a laser beam.

15. The method of claim 14, further comprising feeding the restoration material coaxially to the laser beam.
